# FASCICULE DE BREVET EUROPEEN

(11) **EP 0 451 034 B1**
(45) Date de publication et mention de la délivrance du brevet: **17.05.1995**
(21) Numéro de dépôt: 91400859.4
(22) Date de dépôt: 29.03.1991
(51) Int. Cl.: G02B 27/28, H04N 9/31

(54) **Dispositif de projection d'images**
Vorrichtung für Bildprojektion
Device for image projection

(30) Priorité: 03.04.1990 FR 9004237
(43) Date de publication de la demande: 09.10.1991
(73) Titulaire: THOMSON-CSF, 75008 Paris (FR)
(72) Inventeur: Lehureau, Jean-Claude, F-92045 Paris la Defense (FR); Mourey, Bruno, F-92045 Paris la Defense (FR)
(74) Mandataire: Guérin, Michel

(56) Documents cités:
- EP-A- 0 313 681
- EP-A- 0 322 714
- FR-E- 84 208
- GB-A- 773 217

## Description

L'invention se rapporte à un dispositif de projection d'images dans lequel la lumière est modulée par son passage dans des modulateurs de polarisation de la lumière, ces derniers étant constitués par exemple par les cellules à cristaux liquides d'un écran à cristaux liquides à adressage matriciel. L'invention a pour objet un agencement nouveau qui permet d'améliorer de façon considérable l'efficacité lumineuse dans de tels dispositifs de projection et particulièrement, mais non exclusivement, dans le domaine des appareils professionnels.

Dans les projecteurs d'images classiques qui utilisent un écran matriciel à cristaux liquides, chaque cellule à cristaux liquides de cet écran correspond à un point d'image. En prenant pour exemple, pour simplifier la description, le cas où chaque point d'image peut être soit au maximum du "blanc" soit au maximum du "noir", l'action d'une cellule sur une lumière qui la traverse consiste à en modifier la polarisation ou non selon que la cellule est à l'état dit "passant" ou bien à l'état dit "bloquant", c'est-à-dire selon qu'un champ électrique est appliqué ou non à la cellule à cristaux liquides.

Généralement, la lumière utilisée est au départ du type non polarisé, dont on admet qu'elle comporte deux composantes ayant des plans de polarisation orthogonaux. Avant d'être appliquée à l'écran à cristaux liquides, la lumière passe dans un dispositif appelé polariseur, qui en supprime une composante de polarisation donnée, de manière que seule l'autre composante ayant l'autre polarisation soit éventuellement soumise à l'action des cellules à cristaux liquides.

Après passage de la lumière dans les cellules, la lumière peut comporter à nouveau les deux types de polarisation selon une distribution spatiale qui est fonction de la distribution spatiale des cellules à l'état "passant" et à l'état "bloquant". La visualisation des deux états des cellules est obtenue en faisant alors passer la lumière par un moyen d'analyse de la polarisation permettant d'effectuer une analyse de polarisation et d'agir sur au moins l'une des deux composantes en fonction de sa polarisation.

Dans le cas présent, ce moyen d'analyse permet de transmettre l'une des polarisations et d'absorber l'autre, c'est-à-dire qu'il fonctionne comme le polariseur ci-dessus mentionné.

Il est à noter que parmi les dispositifs qui entrent dans la catégorie des moyens d'analyse de polarisation tels que ci-dessus définis, on peut citer des dispositifs appelés séparateurs de polarisation, dont la fonction est plus précisément de séparer les deux composantes de polarisation différente en deux faisceaux ayant des directions différentes en fonction de leur polarisation.

On observe que dans le fonctionnement d'un projecteur de l'art antérieur tel que ci-dessus décrit, avant de faire passer la lumière par l'écran à cristaux liquides, il est nécessaire d'absorber l'une des deux polarisations de cette lumière. Il en résulte une perte de lumière de 50 % , à laquelle doivent s'ajouter les pertes en transmission dans le polariseur et le moyen d'analyse.

L'un des buts principaux de la présente invention est d'améliorer de manière significative le rendement entre la lumière utile à l'image et la lumière disponible, dans un projecteur d'image du type utilisant un modulateur de polarisation tel que par exemple un écran à cristaux liquides.

Avec l'invention, ce but est atteint à l'aide d'un agencement nouveau qui a pour effet notamment de permettre l'utilisation des deux composantes de polarisation orthogonales de la lumière pour construire l'image projetée.

Selon l'invention, un dispositif de projection comportant :
- une source de lumière produisant un premier faisceau,
- un modulateur de polarisation pour faire tourner de façon sélective la polarisation de la lumière en fonction d'une image à projeter,

est caractérisé en ce qu'il comporte en outre :
- un séparateur de polarisation placé entre la source et le modulateur et permettant de séparer la lumière d'après son état de polarisation en un deuxième et un troisième faisceaux ayant des directions différentes en fonction de leur polarisation, ces deux faisceaux étant appliqués au modulateur de polarisation d'où ils ressortent sous la forme respectivement d'un quatrième et cinquième faisceaux,
- un moyen d'analyse disposé à l'opposé du séparateur par rapport au modulateur de polarisation, ledit moyen d'analyse recevant les quatrième et cinquième faisceaux sur lesquels il permet d'effectuer une analyse de polarisation de chacun des faisceaux, lesdits quatrième et cinquième faisceaux étant utilisés pour construire l'image à projeter.

L'invention sera mieux comprise à la lecture de la description qui suit, faite à titre d'exemple non limitatif en référence aux dessins annexés parmi lesquels :
- la figure 1 montre de manière schématique une forme de réalisation préférée d'un projecteur d'image conforme à l'invention ;
- la figure 2 représente schématiquement la structure d'un séparateur de polarisation utilisé dans l'invention ;
- la figure 3 illustre une version de l'invention utilisant un unique séparateur de polarisation montré à la figure 2 ;
- la figure 4 montre schématiquement une variante de l'invention dans un montage fonctionnant en réflexion.

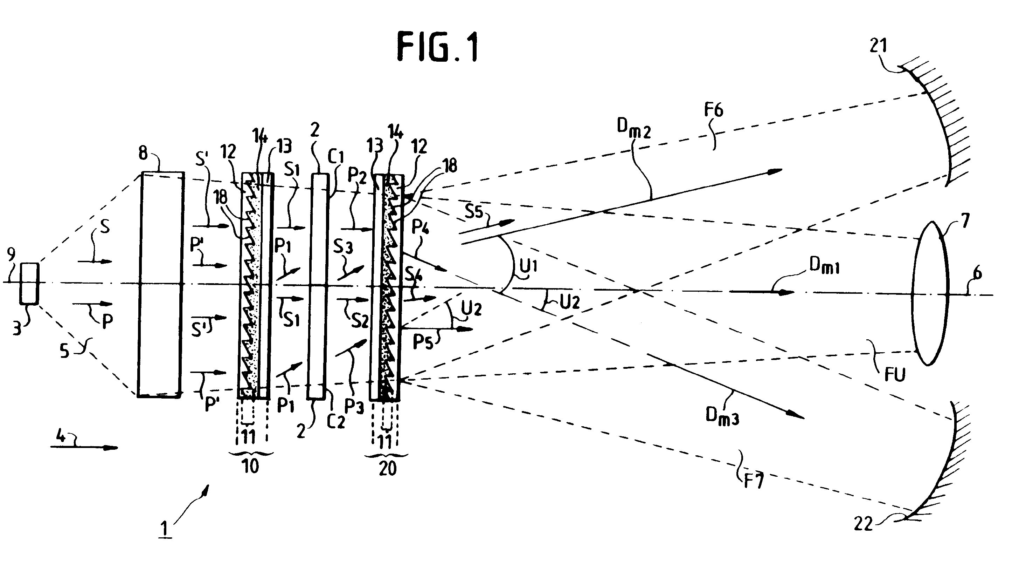

La figure 1 montre à titre d'exemple non limitatif un projecteur 1 d'images selon l'invention, utilisant un écran 2 à cristaux liquides pour moduler la polarisation de la lumière en fonction d'une image à projeter.

Bien entendu une telle modulation peut être effectuée à l'aide de tout autre moyen capable, comme les cellules à cristaux liquides, de moduler la polarisation de la lumière, à l'aide par exemple de modulateurs magnéto-optiques utilisant l'effet Faraday.

L'écran 2 à cristaux liquides est un écran matriciel en lui-même classique, constitué par exemple d'une pluralité de cellules à cristaux liquides disposées en lignes et en colonnes ; les lignes de cellules étant par exemple perpendiculaires au plan de la figure, l'écran 2 apparaît sur la figure 1 selon une colonne comportant seulement 2 cellules C1, C2 pour simplifier la description.

Dans cette première version de l'invention, les cellules C1, C2 sont du type nématique en hélice à 90°. Dans l'exemple non limitatif décrit, ces cellules C1, C2 tournent de 90° la polarisation de la lumière qui les traverse quand aucun champ électrique ne leur est appliqué : c'est-à-dire quand elles sont à l'état dit "bloquant" ; pour simplifier la description nous supposerons que les cellules fonctionnent par "tout ou rien" c'est-à-dire que les polarisations ne sont en rien modifiées quand les cellules C1, C2 sont à l'état contraire dit état "passant", qui correspond à l'application d'un champ électrique.

Le projecteur 1 comporte une source 3 de lumière qui produit une lumière 5 dite "non polarisée" dont il est admis qu'elle comporte deux composantes ayant des plans de polarisations S, P orthogonaux.

L'écran 2 et la source 3 sont alignés sur un axe de source 9. Dans l'exemple non limitatif décrit, l'axe de source 9 est confondu avec un axe optique 6 sur lequel est centré un objectif de projection 7. L'objectif 7 est destiné à recevoir la lumière utile à former l'image, en vue d'en assurer la projection sur un écran par exemple (non représenté). La lumière 5 constitue un premier faisceau comportant les deux polarisations S et P (représentées par des flèches) et qui se propage dans le sens montré par la flèche 4 ; le premier faisceau 5 passe par un condensateur 8 qui tend à le focaliser sur l'objectif 7.

Selon une caractéristique de l'invention, un séparateur de polarisation 10 est interposé entre la source 3 et l'écran 2, plus précisément entre le condensateur 8 et l'écran 2.

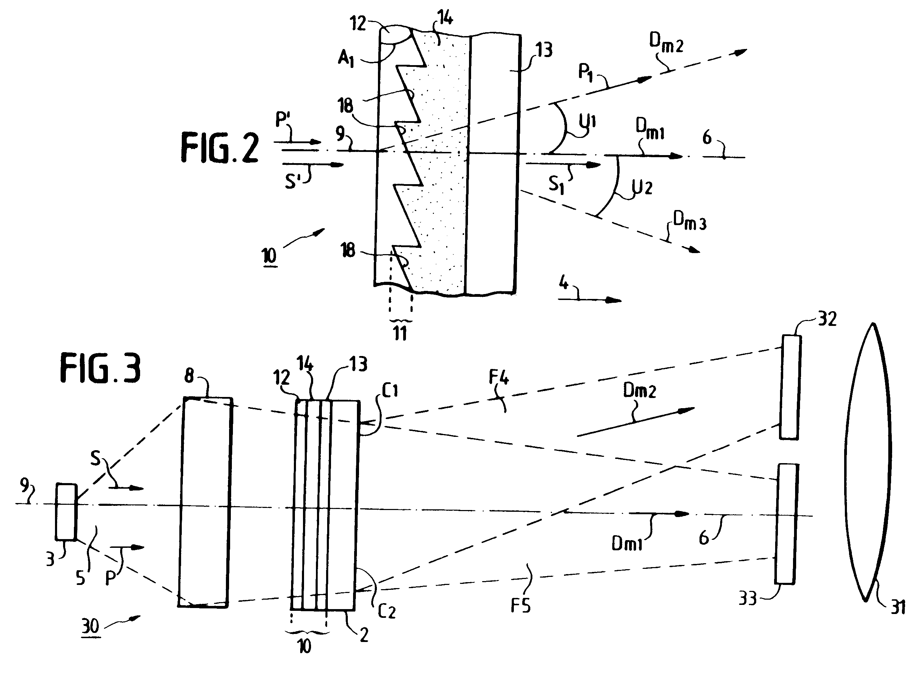

La fonction du séparateur 10 est de conférer des directions angulaires différentes aux deux polarisations que comprend le premier faisceau 5, comme décrit ci-après en référence aux figures 1 et 2.

La figure 2 représente partiellement par une vue en coupe, à titre d'exemple non limitatif, la structure du séparateur 10 de polarisation. Le séparateur 10 comprend une cellule à cristaux liquides formée par deux lames transparentes parallèles 12, 13 en verre par exemple, entre lesquelles est contenu le cristal liquide 14 ; l'indice de réfraction n1 des lames 12, 13 étant par exemple 1, 5.

Le caractère bi-réfringent du cristal liquide 14 coopère avec un réseau prismatique 11 pour défléchir uniquement l'une des deux polarisations de la lumière produite par la source 3.

A cet effet la première lame 12, considérée dans le sens 4 de propagation de la lumière, comporte un réseau prismatique 11 gravé dans une face 16 de la lame 12, face orientée vers le cristal liquide 14 ; ce réseau prismatique est constitué d'une succession de sillons 18 qui s'étendent dans un plan perpendiculaire à celui de la figure et qui apparaissent sur cette dernière selon leur section. L'axe optique 6 est normal au plan des lames de verre 12, 13 et au plan contenant l'ensemble du séparateur 10, et les sillons 18 constituent selon leur section une succession de faces ou plans 18 qui forment des dents de scie, chacun de ces plans formant un angle d'inclinaison A1 avec le plan des lames 12, 13.

D'autre part, le cristal liquide constitue un matériau bi-réfringent tel que décrit par exemple dans la demande de brevet français n° 86 05239 publié sous le n° 2 597 249. De manière en elle-même classique, l'axe d'orientation des molécules du cristal liquide est parallèle au plan des lames 12, 13. Le cristal liquide comporte deux indices de réfraction n2, n3, dont l'un n2 est sensiblement égal à l'indice n1 du verre soit n1 = 1,5 dans l'exemple, et qui s'applique à l'une des polarisations, la première polarisation S par exemple ; l'autre indice n3 est plus grand, de l'ordre de 1,7 par exemple, et cet autre indice n3 s'applique aux rayons de la seconde polarisation P.

Une telle disposition permet de ne défléchir que l'une des polarisations, la polarisation P qui voit l'indice n3 le plus grand, à l'interface lame-cristal liquide 12-14.

La première polarisation S, qui ne voit pas de modification d'indice entre les lames 12, 13 et le cristal traverse le séparateur 10 sans modification de sa direction dans ce dernier et se propage dans une première direction moyenne Dm1 qui est sur l'axe optique 6.

Par contre, pour la seconde polarisation P, le cristal liquide 14 présente un indice n3 plus grand que l'indice n1 du verre et les rayons incidents ayant cette polarisation sont défléchis à l'interface verre-cristal liquide 12-14 d'un angle U2 de déflexion. L'angle d'inclinaison A1 est choisi en combinaison avec la valeur de l'indice n3 pour que la déflexion de la seconde polarisation P soit supérieure à l'ouverture de l'objectif 7, de manière que des rayons issus de cette polarisation P tombent en dehors de l'objectif 7 comme il est davantage expliqué dans la suite de la description.

Ainsi par exemple, dans le cas de rayons S′, P′ provenant du condensateur 8 et arrivant au niveau du séparateur 10 en ayant respectivement les polarisations S et P et avec des directions moyennes parallèles à l'axe optique 6, c'est-à-dire normales au plan de la lame 12 : en supposant par exemple que l'angle d'inclinaison A1 des plans 18 soit de l'ordre de 45° et que l'indice n3 soit 1, 7, les rayons P′ de polarisation P subissent une déviation et ils émergent du séparateur 10 selon des rayons P1 dont la direction moyenne Dm2 forme, par rapport à l'axe optique 6, un premier angle de déflexion U1 ; alors que pour la polarisation S, les rayons S′ émergent du séparateur par des rayons S1 dont la direction moyenne Dm1 est sur l'axe optique 6 c'est-à-dire inchangée.

Dans ces conditions, on peut trouver à la sortie du séparateur 10 un second et un troisième faisceaux S1, P1 de polarisations différentes et de directions différentes, représentés respectivement par les rayons S1 et P1 ; le second faisceau S1 représente la partie non défléchie du premier faisceau 5 ayant la polarisation S, et le troisième faisceau P1 en représente la partie défléchie de polarisation P.

Il est à noter que la déflexion des rayons P′ ayant la seconde polarisation P peut être accomplie aussi dans une troisième direction moyenne Dm3 représentée à la figure, selon un second angle de déflexion U2 de même valeur que le premier angle de déflexion U1, mais de signe contraire. A cet effet, il suffirait par exemple de positionner le séparateur 10 pour que son orientation soit à l'opposé de celle montrée aux figures 1 et 2, c'est-à-dire avec la lame 13 du côté de la source 3 et la lame 12 (lame qui comporte le réseau prismatique 11) du côté de l'écran 2, de manière que les rayons P′ traversent en premier le milieu ayant l'indice le plus grand n3 (cristal liquide) et rencontrent ensuite le milieu ayant l'indice n1 plus faible (lame 12 avec le réseau prismatique 11).

En référence à nouveau plus particulièrement à la figure 1, le second et troisième faisceaux S1, P1 sont appliqués à l'écran 2, c'est-à-dire aux cellules C1, C2 de ce dernier. Afin d'illustrer à la figure 1 simultanément les effets des états "passant" et "bloquant" que peuvent comporter les cellules C1, C2, nous supposerons que la seconde cellule C2 est à l'état "passant" alors que la première cellule C1 est à l'état "bloquant".

En conséquence, en ce qui concerne le second faisceau S1 de polarisation S :
- pour sa part qui traverse la première cellule C1, sa polarisation a tourné et il ressort de cette cellule selon des rayons P2 ayant la polarisation P et une direction moyenne Dm1 inchangée parallèle à l'axe optique 6,
- pour la part du second faisceau S1 qui traverse la seconde cellule C2, elle ressort avec une même première direction moyenne Dm1 parallèle à l'axe optique 6 et une même polarisation S, comme symbolisé par un rayon S2.

En ce qui concerne le troisième faisceau P1 de polarisation de type P :
- pour sa part qui traverse la première cellule C1, sa polarisation a tourné et il ressort comme symbolisé par un rayon repéré S3 ayant une polarisation de type S et une même seconde direction moyenne Dm2,
- pour sa part qui traverse la seconde cellule C2, il ressort sous la forme symbolisée par un rayon P3 avec une même seconde direction moyenne Dm2 et une même polarisation de type P.

On trouve ainsi en sortie de l'écran 2 :
- d'une part, un quatrième faisceau ayant une direction moyenne Dm1 située sur l'axe optique 6 et formé par les rayons P2, S2 de polarisation respectivement P et S ;
- d'autre part, un cinquième faisceau dont la direction moyenne Dm2 présente avec l'axe optique 6 le premier angle de déflexion U1 précédemment mentionné ; ce cinquième faisceau étant formé des rayons ou faisceaux P3, S3 de polarisation respectivement P et S.

Dans cette version de l'invention, selon une caractéristique de l'invention, un second séparateur de polarisation 20 est interposé entre l'objectif 7 et l'écran 2.

Ce second séparateur 20 a pour fonction, en coopération avec le premier séparateur 10 et l'écran 2, d'opérer une déflexion sur les rayons dont la polarisation est de type P, cette déflexion étant sensiblement d'une même valeur mais d'un sens contraire à la première (réalisée par le premier séparateur 10), de manière à orienter parallèlement à l'axe optique 6 certains des rayons ayant déjà été défléchis par le premier séparateur 10 ; mais cette seconde déflexion n'est réalisée que pour les rayons de polarisation P qui sont passés par une cellule à l'état "passant", c'est-à-dire dans l'exemple pour le rayon qui a traversé la seconde cellule C2. En fait le second séparateur 20 doit défléchir les rayons dont la polarisation est la même que celle pour laquelle le premier séparateur 10 produit des déflexions.

A cet effet, le second séparateur 20 peut être réalisé d'une même manière que le premier séparateur 10, mais dans l'exemple illustré à la figure 1, il doit alors être orienté à l'inverse de ce dernier comme il a été précédemment mentionné : c'est-à-dire que dans le sens 4 de propagation, on trouve d'abord la lame 13, puis ensuite le cristal liquide 14, puis enfin la lame 12 comportant le réseau prismatique 11. Le second séparateur 20 n'a pas d'action sur la polarisation de type S, mais il agit sur la polarisation de type P.

Par suite, les rayons S3 de polarisation S traversent le second séparateur 20 d'où ils sortent en conservant la même direction qu'à l'entrée, c'est-à-dire avec la seconde direction moyenne Dm2 qui forme avec l'axe optique 6 un angle de même valeur et de même signe que le premier angle de déflexion U1. Ces rayons constituent alors un sixième faisceau F6 ayant la seconde direction moyenne Dm2 et qui passe en dehors de l'objectif 7, et qui donc ne constitue pas une part de lumière servant à construire l'image à projeter.

D'autre part, les rayons S2 dont la polarisation est également de type S traversent le second séparateur 20 ; ils en ressortent selon des rayons S4 en conservant eux aussi leur direction, de telle sorte que ces rayons S4 ont une direction moyenne sur l'axe optique 6 et arrivent sur l'objectif 7 pour réaliser l'image à projeter.

En ce qui concerne les rayons dont la polarisation est de type P :
- les rayons P2 sont défléchis dans leur traversée du second séparateur 20, en sens contraire de la déflexion opérée au niveau du premier séparateur 10. Par suite ces rayons émergent du séparateur 20 selon des rayons P4 qui constituent un septième faisceau F7 dont la direction moyenne Dm3 s'écarte de l'axe optique 6 selon le second angle de déflexion U2 ayant une même valeur que le premier angle de déflexion U1 mais de signe contraire. Ce faisceau F7 passe en dehors de l'objectif 7, et ne constitue pas urne part de lumière servant à construire l'image à projeter,
- les rayons P3 dont la direction moyenne Dm2 s'écarte de l'axe optique 6 avant qu'ils n'arrivent dans le second séparateur 20, sont défléchis dans ce dernier d'un angle de déflexion U2 dans un sens contraire à la déflexion opérée dans le premier séparateur 10, de telle manière qu'à la sortie du second séparateur 20 ils sont représentés par un rayon P5 dont la direction moyenne est parallèle à l'axe optique 6.

Ainsi le ou les rayons P5 dont la polarisation est de type P ont la première direction moyenne Dm1 et arrivent sur l'objectif 7 et, avec les rayons S4 dont la polarisation est de type S, ils constituent un faisceau utile FU comportant les deux types de polarisation et qui sert à former l'image à projeter.

Les sixième et septième faisceaux F6, F7 représentent une quantité de lumière dont l'importance est d'autant plus grande que le niveau lumineux moyen de l'image est faible.

Dans le cadre de l'invention, cette quantité de lumière peut être récupérée, à l'aide de par exemple un miroir 21, 22 pour chacun des sixième et septième faisceaux S4, P4. Chacun de ces faisceaux peut alors être réfléchi en direction de la source 3 en accomplissant un trajet (non représenté) inverse de celui qui a été précédemment décrit, en passant successivement par le second séparateur 20, l'écran 2 et le premier séparateur 10 ; un réflecteur (non représenté pouvant bien entendu être associé à la source 3).

Dans l'exemple non limitatif décrit en référence à la figure 1, les deux séparateurs 10, 20 sont réalisés de façons identiques. Ils diffèrent d'une part par leur position en amont ou en aval du modulateur 2 ; ils diffèrent d'autre part par leur orientation : l'orientation du premier séparateur 10 est telle que la première lame 12 (qui porte le réseau prismatique 11) est orientée vers la source 3, alors que le second séparateur 20 a une orientation contraire avec la première lame 12 tournée vers l'objectif. Il en résulte qu'entre ces deux séparateurs 10, 20 les plans successifs 18 (qui forment un réseau prismatique 11) sont parallèles.

Mais il est également possible d'obtenir un faisceau utile semblable au faisceau utile FU, et deux faisceaux de polarisations opposées semblables aux sixième et septième faisceaux F6, F7 à l'aide d'un montage (non représenté) dans lequel les deux polariseurs qui encadrent le modulateur 2 auraient des réseaux prismatiques symétriques par rapport au modulateur 2.

Par exemple, dans un tel montage, le premier séparateur 10 situé en amont du modulateur 2 étant inchangé, le second séparateur situé en aval peut être orienté comme le second séparateur 20 et il peut comporter un réseau prismatique dont les plans tels que les plans 18 sont antiparallèles aux plans 18 du premier séparateur 10. Dans ce cas, l'axe du faisceau utile sortant du second séparateur et servant à construire l'image à projeter, c'est-à-dire l'axe optique sur lequel est centré l'objectif de projection, est décalé angulairement par rapport à l'axe de source 9. Par exemple dans un tel cas l'axe de ce faisceau utile peut être tel que la seconde direction moyenne Dm2, montrée à la figure 1, avec de part et d'autre les faisceaux de lumière non utile tels que les sixième et septième faisceaux F6, F7 ; l'angle formé entre l'axe de source 9 et l'axe de ce faisceau utile étant semblable au premier angle de déflexion U1.

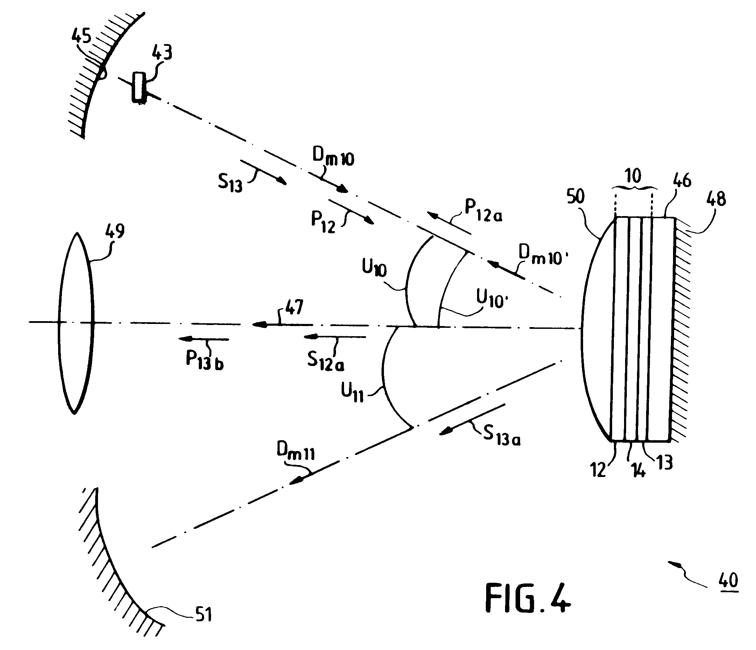

Cette possibilité d'un fonctionnement avec les deux réseaux prismatiques disposés de manière symétrique, par rapport au modulateur 2, peut être utilisée dans un montage du type à réflexion, comme il est davantage décrit dans une suite de la description relative à la figure 4.

La figure 3 montre de manière schématique un projecteur 30 selon l'invention dans une version dans laquelle la déflexion des rayons d'un type donné de polarisation est effectuée uniquement au niveau du premier séparateur 10.

Le projecteur 30 comporte une source 3, un condensateur 8, un premier séparateur 10, un écran 2, dont la disposition est le fonctionnement sont les mêmes que dans l'exemple de la figure 1. Comme dans le cas de la figure 1, l'axe de source 9 et l'axe optique 6 sont confondus.

A la sortie de l'écran 2, et comme dans l'exemple précédent, on trouve un quatrième faisceau F4 formé des rayons P2, S2 ayant la première direction moyenne Dm1 et un cinquième faisceau F5 formé des rayons P3 et S3 ayant la seconde direction moyenne Dm2. Chaque faisceau F4, F5 comporte les deux types de polarisation P et S dont l'une est passée par la première cellule C1 et l'autre par la seconde cellule C2. Aussi il suffit de filtrer chacun de ces faisceaux F4, F5 pour ne laisser subsister que la polarisation qui représente une lumière utile à construire l'image à projeter.

A cette fin on interpose, entre l'écran 2 et un objectif 31 recevant les deux faisceaux F4, F5 comme montré à la figure 3, un premier analyseur ou polariseur 32 disposé sur le trajet du faisceau F4 et un second polariseur 33 sur le trajet du faisceau F5. Le premier polariseur 32 absorbe la polarisation de type P et le second polariseur absorbe la polarisation de type S, de telle sorte que le second objectif 31 n'est éclairé que par des rayons ayant traversé la seconde cellule C2 à l'état "passant", à savoir les rayons S2 et P3.

La figure 4 illustre de manière schématique une application de l'invention à un projecteur 40 du type fonctionnant en réflexion.

La lumière est produite par un ensemble formé d'une source 43 et d'un réflecteur 45. La polarisation de la lumière est modulée par un second écran 46 à cristaux liquides de type à adressage matriciel par exemple. La lumière se propage depuis la source 43 en direction de l'écran 46 avec une direction moyenne Dm10 qui est sur l'axe de source 9. L'axe de source 9 forme un angle U10 avec un axe 47 normal au plan du second écran 46.

Comme dans l'exemple de la figure 1, un séparateur de polarisation 10 (ayant une même structure que celle montrée à la figure 2) est interposé entre le second écran 46 et la source 43.

Un miroir principal 48 est disposé derrière le second écran 46 de telle sorte que ce dernier est placé entre le séparateur 10 et ce miroir principal 48. Le séparateur 10 , le second écran 46 et le miroir principal 48 sont alignés sur l'axe 47 qui constitue un axe optique principal sur lequel en outre est situé un objectif 49 de projection ; l'axe optique 47 est normal aux plans du séparateur 10, du second écran 46 et du miroir principal 48. Dans l'exemple non limitatif décrit, une lentille 50, dite lentille de champ, est disposée sur l'axe optique 47 entre l'objectif 49 et le séparateur 10 auquel elle peut être accolée comme montré à la figure 4, de manière à former un ensemble comprenant successivement la lentille 50, le séparateur 10, l'écran 46 et le miroir principal 48 la fonction de la lentille 50 étant notamment de réimager la source 43 sur la pupille de l'objectif 49.

Le séparateur 10 a une action sur les deux composantes de polarisation P et de polarisation S de la lumière produite par la source 43, action qui est semblable à celle qu'il produit sur la lumière provenant de la source 3 montrée aux figures 1 et 3. On représente sur la figure 4 ces deux polarisations P et S à 90° l'une de l'autre par des flèches repérées respectivement P12 et S13.

Le second écran 46 comporte une pluralité de cellules à cristaux liquides (non représentées) qui, de manière traditionnelle, font tourner ou non la polarisation de la lumière qui les traverse selon qu'elles sont à l'état "bloquant" ou "passant". Le second écran 46 est d'un type en lui-même classique et par rapport au premier écran 2 décrit en référence aux figures 1 et 3, le second écran 46 est différent en ce que les cellules qu'il comporte font tourner les polarisations de seulement 45°, comme par exemple dans certaines montres-bracelets à cristaux liquides fonctionnant par réflexion.

Les rayons P12 et S13 qui traversent le second écran 46 d'une part ne subissent pas de rotation de polarisation quand ils passent par une cellule à l'état "passant" ; d'autre part, quand ils passent par une cellule à l'état "bloquant", ils subissent une rotation de 45° quand ils se propagent dans le sens du séparateur 10 vers le miroir principal 48, plus une autre rotation de 45° qui s'ajoute à la première quand ils se propagent du miroir principal 48 vers le séparateur 10 du fait qu'ils traversent la même cellule. Par suite, les rayons provenant de la source 43 et ayant une polarisation de type P, comportent une polarisation de type S à leur sortie du séparateur 10 après réflexion sur le miroir principal et s'ils sont passés par une cellule à l'état "bloquant" ; et de même pour les rayons de polarisation S qui acquièrent une polarisation de type P s'ils passent par une cellule à l'état "bloquant".

En supposant que l'angle de décalage U10, formé entre l'axe de source 9 c'est-à-dire entre la direction moyenne Dm10 (de la lumière provenant de la source 43) et l'axe optique principal 47, ait une même valeur que le premier angle de déflexion U1 (montré à la figure 2) selon lequel la polarisation P est défléchie dans le séparateur 10, les rayons de polarisation P représentés par la flèche P12 sont défléchis dans le séparateur 10 de telle sorte qu'ils pénètrent dans le second écran 46 avec une direction moyenne qui est sur l'axe optique principal 47. Ensuite le trajet de ces rayons de polarisation P est conditionné par leur passage dans le second écran 46, selon qu'ils passent par des cellules à l'état "passant" ou l'état "bloquant" :
- dans le cas des cellules à l'état "passant" ces rayons de polarisation P traversent les cellules sans subir de rotation de leur phase, puis ils sont réfléchis par le miroir principal 48 dans une direction moyenne qui est sur l'axe optique principal 47, c'est-à-dire vers le séparateur 10 ; donc ces rayons traversent une seconde fois le second écran 46, puis une seconde fois le séparateur 10 dans lequel ils sont défléchis une seconde fois et d'où ils sortent selon des rayons repérés P12a. Mais du fait que ces rayons rencontrent successivement un indice plus grand (du cristal liquide) puis un indice plus faible (du verre), cette seconde déflexion est opérée en sens contraire de la précédente, selon un angle de déflexion U10′ ayant une même valeur que l'angle de décalage U10 mais un signe contraire. En conséquence les rayons P12a, qui ne représentent pas une part de lumière utile à l'image, retournent vers la source 43 avec une direction moyenne Dm10′ qui est sur l'axe de source 9 ;
- dans le cas où ils traversent des cellules à l'état "bloquant", ces rayons de polarisation P ayant pour origine les rayons P12, subissent une rotation de 45° de leur polarisation, puis ils sont réfléchis par le miroir principal dans une direction moyenne qui est sur l'axe optique principal 47 ; puis ces rayons traversent une seconde fois la cellule à l'état "bloquant" du second écran 46 où leur polarisation subit une rotation supplémentaire de 45°, soit en tout 90°, c'est-à-dire que ces rayons ont alors une polarisation de type S. Ces rayons traversent ensuite le séparateur 10 dans lequel ils ne sont pas déviés du fait qu'ils ont une polarisation S. Ces rayons sortent du séparateur selon des rayons repérés S12a avec une direction moyenne qui est sur l'axe optique principal 47, et ils sont captés par l'objectif 49 pour constituer l'image à projeter.

Pour ce qui est des rayons S13 provenant de la source 43 et dont la polarisation est de type S, ils traversent le séparateur 10 en conservant leur orientation, et ils pénètrent dans le second écran avec la même direction moyenne Dm10. Pour ces rayons S13, deux cas sont à considérer quand ils traversent l'écran 46 selon qu'ils passent par une cellule à l'état "bloquant" ou à l'état "passant"
- quand ils passent par une cellule à l'état "passant" leur polarisation n'est pas modifiée, et ils sont réfléchis par le miroir principal 48 symétriquement de la source 43 par rapport à l'axe optique 47 ; ils traversent une seconde fois, en sens opposé, l'écran 43 et le séparateur 10 d'où ils émergent selon des rayons repérés S13a, avec une direction moyenne Dm11 différente de l'axe optique principal 47 avec lequel ils forment un angle U11 ayant une même valeur que l'angle de décalage U10 formé entre l'axe optique 47 et l'axe de source 9. En conséquence, ces rayons S13a ne sont pas captés par l'objectif et ne participent pas à la construction de l'image à projeter
- dans le second cas, quand ils passent par une cellule à l'état "bloquant" en direction du miroir principal 48, leur polarisation tourne de 45°, puis après réflexion par le miroir principal 48, le second passage en sens inverse dans la cellule apporte une rotation de polarisation supplémentaire de 45°, soit en tout 90°, et ces rayons ont alors une polarisation de type P. Ces rayons ont au préalable été réfléchis par le miroir 48 symétriquement de la source 43 par rapport à l'axe optique principal 47 en direction du séparateur 10. Dans le séparateur 10, ces rayons ayant une polarisation de type P, ils sont défléchis d'une même valeur angulaire que l'angle de décalage U10, mais de signe contraire, de telle manière que leur direction moyenne est ramenée sur l'axe optique principal 47. Ces rayons repérés P13b sortent du séparateur 10 en direction de l'objectif 49, ils sont captés par ce dernier et servent à construire l'image à projeter.

Les rayons S13a de polarisation S, qui sortent du séparateur 10 selon la direction moyenne Dm11 différente de l'objectif 49, constituent un faisceau de lumière non utile, c'est-à-dire qui n'est pas utilisé pour construire l'image à projeter. Il est cependant possible d'utiliser cette lumière afin d'augmenter la luminance crête du projecteur lorsque le niveau lumineux moyen de l'image est faible.

A cet effet, on peut disposer un miroir auxiliaire 51 sur le trajet du faisceau de lumière non utile S13a, de manière à réfléchir ce faisceau vers la source 46. On pallie ainsi un défaut des systèmes à cristaux liquides qui est d'offrir une efficacité lumineuse globale faible lorsque l'ensemble de l'image est sombre.

Cette description constitue un exemple non limitatif. D'autres montages peuvent être choisis utilisant par exemple une cellule à cristaux liquides à structure à hélice, ou une cellule demi-onde à 45° en transmission, ou encore une cellule quart d'onde en réflexion, sans autant sortir du cadre de l'invention, dès lors qu'un séparateur de polarization est utilisé pour séparer spatialement les deux composantes de polarisation orthorgonales pour les moduler par l'écran à cristaux liquides, avant de recombiner ces deux composantes.

Il est à noter en outre que dans les différents exemples de réalisation montrés aux figures 1, 3, 4 le ou les séparateurs 10, 20 peuvent être accolés au modulateur c'est-à-dire à l'écran matriciel 2, 46 à cristaux liquides, et que les lames de verre 12, 13 des séparateurs 10, 20 peuvent constituer en même temps la paroi d'un écran matriciel 2,46 à cristaux liquides.

## Revendications

1. Dispositif de projection comprenant :
- une source de lumière (3,43) produisant un premier faisceau (S,P)
- un modulateur de polarisation (2, 46) pour faire tourner de façon sélective la polarisation de la lumière en fonction d'une image à projeter,
caractérisé en ce qu'il comporte en outre :
- un séparateur de polarisation (10) placé entre la source (3, 43) et le modulateur (2, 46) et permettant de séparer la lumière d'après son état de polarisation en un deuxième et un troisième faisceaux (S1, P1) ayant des directions différentes, ces deux faisceaux étant appliqués au modulateur (2, 46) d'où ils ressortent sous la forme d'un quatrième et d'un cinquième faisceaux (P2, S2 et P3, S3),
- un moyen d'analyse des polarisations (20, 32, 33) disposé à l'opposé du séparateur (10) par rapport au modulateur (2, 46), ledit moyen d'analyse (20, 32, 33) recevant les quatrième et cinquième faisceaux (P2, S2 et P3, S3) sur lequel il permet d'effectuer une analyse de polarisation, lesdits quatrième et cinquième faisceaux étant utilisés au moins partiellement pour construire l'image à projeter.

2. Dispositif selon la revendication 1, caractérisé en ce que le moyen d'analyse comprend un deuxième séparateur (20) de polarisation recevant les quatrième et cinquième faisceaux (P2, S2 et P3, S3), à partir desquels il permet de réaliser d'une part un faisceau utile (FU) et d'autre part deux faisceaux (F6, F7) de lumière non utile.

3. Dispositif selon l'une des revendications précédentes, caractérisé en ce que le modulateur de polarisation (2, 46) est un écran à cristaux liquides.

4. Dispositif selon l'une des revendications précédentes, caractérisé en ce qu'au moins un des séparateurs de polarisation (10, 20) comporte un réseau prismatique (11) coopérant avec un milieu de type bi-réfringent (14).

5. Dispositif selon la revendication 2, caractérisé en ce que le second séparateur de polarisation (20) agit sur des rayons ayant une même polarisation que les rayons sur lesquels agit le premier séparateur (10).

6. Dispositif selon l'une des revendications 2 ou 5, caractérisé en ce que les deux séparateurs de polarisation (10, 20) produisent des déflexions selon des angles de déflexion (U1, U2) ayant des valeurs sensiblement égales mais des signes contraires.

7. Dispositif selon l'une des revendications précédentes, caractérisé en ce qu'un miroir (21, 22) est placé sur le trajet d'au moins un des faisceaux de lumière non utile (F6, F7) en vue de réfléchir cette lumière vers la source (3, 43).

8. Dispositif selon l'une quelconque des revendications 1 ou 3 ou 4, caractérisé en ce que le moyen d'analyse comprend un premier et un second polariseurs (32, 33) placés respectivement sur le trajet du quatrième et du cinquième faisceaux (P2, S2 et P3, S3).

9. Dispositif selon la revendication 8, caractérisé en ce que les polariseurs (32, 33) absorbent des composantes (P, S) de lumière différentes, ayant des polarisations à 90° l'une de l'autre.

10. Dispositif selon l'une quelconque des revendications 1 ou 3 ou 4, caractérisé en ce qu'il est du type fonctionnant en réflexion, et en ce que le modulateur de phase (46) est suivi, à l'opposé du premier séparateur de polarisation (10), par un miroir principal (48).

11. Dispositif selon la revendication 10, caractérisé en ce que le séparateur de polarisation (10), le modulateur (46) et le miroir principal (50) sont alignés sur un axe optique principal (47), et en ce que la source (46) est située sur un axe de source présentant avec l'axe optique principal (47) un angle (U10) dont la valeur est sensiblement la même que celle d'un angle de déflexion (U1) selon lequel des rayons d'une polarisation donnée sont défléchis dans le séparateur de phases (10).

12. Dispositif selon la revendication 11, caractérisé en ce qu'il comporte en outre un miroir auxiliaire (50) permettant de réfléchir vers la source (43) un faisceau de lumière non orienté sur l'axe optique principal (47).

13. Dispositif selon l'une quelconque des revendications 2 ou 4 ou 5 ou 6, caractérisé en ce que les deux séparateurs de polarisation (10, 20) comportent un réseau prismatique (11) ayant des faces (18) inclinées par rapport au plan du séparateur, et en ce qu'entre les deux séparateurs (10, 20) lesdites faces (18) sont parallèles.

14. Dispositif selon l'une quelconque des revendications 2 ou 4 ou 5, caractérisé en ce que les deux séparateurs de polarisation (10, 20) comportent un réseau prismatique (11) ayant des faces (18) inclinées par rapport au plan du séparateur, et en ce qu'entre les deux séparateurs (10, 20) lesdites faces (18) sont sensiblement symétriques par rapport au modulateur de polarisation (2).

## Patentansprüche

1. Projektionsvorrichtung
- mit einer Lichtquelle (3, 43), die einen ersten Lichtstrahl (S, P) erzeugt,
- mit einem Polarisationsmodulator (2, 46), um selektiv die Polarisation des Lichts abhängig von einem zu projizierenden Bild zu drehen,
dadurch gekennzeichnet, daß die Vorrichtung weiter aufweist:
- einen Polarisationsseparator (10), der zwischen der Quelle (3, 43) und dem Modulator (2, 46) liegt und das Licht gemäß dessen Polarisationszustand in einen zweiten und einen dritten Strahl (S1, P1) unterschiedlicher Richtungen zu trennen vermag, worauf diese beiden Strahlen auf den Modulator (2, 46) treffen, aus dem sie in Form eines vierten und eines fünften Strahls (P2, S2 und P3, S3) austreten,
- ein Polarisationsanalysemittel (20, 32, 33), das entgegengesetzt zum Separator (10) bezüglich des Modulators (2, 46) liegt und den vierten und fünften Strahl (P2, S2 und P3, S3) empfängt, um diese Strahlen einer Polarisationsanalyse zu unterwerfen, wobei der vierte und der fünfte Strahl zumindest teilweise zum Aufbau des zu projizierenden Bilds verwendet werden.

2. Vorrichtung nach Anspruch 1, dadurch gekennzeichnet, daß das Analysemittel einen zweiten Polarisationsseparator (20) enthält, der den vierten und fünften Strahl (P2, S2 und P3, S3) empfängt und aus ihnen einerseits einen Nutzstrahl (FU) und andererseits zwei nicht genutzte Lichtstrahlen (F6, F7) erzeugt.

3. Vorrichtung nach einem der vorhergehenden Ansprüche, dadurch gekennzeichnet, daß der Modulationspolarisator (2, 46) ein Flüssigkristallschirm ist.

4. Vorrichtung nach einem der vorhergehenden Ansprüche, dadurch gekennzeichnet, daß mindestens einer der Polarisationsseparatoren (10, 20) ein prismatisches Netz (11) enthält, das mit einem doppelbrechenden Milieu (14) zusammenwirkt.

5. Vorrichtung nach Anspruch 2, dadurch gekennzeichnet, daß der zweite Polarisationsseparator (20) auf Strahlen mit einer gleichen Polarisation wie die Strahlen einwirkt, auf die der erste Separator (10) einwirkt.

6. Vorrichtung nach einem der Ansprüche 2 oder 5, dadurch gekennzeichnet, daß die beiden Polarisationsseparatoren (10, 20) Ablenkungen gemäß gleichen Ablenkungswinkeln (U1, U2), aber unterschiedlichen Vorzeichens erzeugen.

7. Vorrichtung nach einem der vorhergehenden Ansprüche, dadurch gekennzeichnet, daß ein Spiegel (21, 22) sich im Verlauf mindestens eines der nicht genutzten Lichtstrahlen (F6, F7) befindet, um dieses Licht zur Quelle (3, 43) zu reflektieren.

8. Vorrichtung nach einem beliebigen der Ansprüche 1 oder 3 oder 4, dadurch gekennzeichnet, daß das Analysemittel einen ersten und einen zweiten Polarisator (32, 33) enthält, die im Verlauf des vierten bzw. des fünften Strahls (P2, S2 bzw. P3, S3) liegen.

9. Vorrichtung nach Anspruch 8, dadurch gekennzeichnet, daß die Polarisatoren (32, 33) unterschiedliche Lichtkomponenten (P, S) absorbieren, die zueinander um 90° gedrehte Polarisationen besitzen.

10. Vorrichtung nach einem beliebigen der Ansprüche 1 oder 3 oder 4, dadurch gekennzeichnet, daß sie vom Reflexionstyp ist und daß auf den Phasenmodulator (46) entgegengesetzt zum ersten Polarisationsseparator (10) ein Hauptspiegel (48) folgt.

11. Vorrichtung nach Anspruch 10, dadurch gekennzeichnet, daß der Polarisationsseparator (10), der Modulator (46) und der Hauptspiegel (48) auf einer optischen Hauptachse (47) fluchtend angeordnet sind und daß die Quelle (43) auf einer Quellenachse liegt, die mit der optischen Hauptachse (47) einen Winkel (U10) einschließt, dessen Wert im wesentlichen derselbe wie der eines Ablenkungswinkels (U1) ist, gemäß dem Strahlen einer bestimmten Polarisation im Phasenseparator (10) abgelenkt werden.

12. Vorrichtung nach Anspruch 11, dadurch gekennzeichnet, daß sie außerdem einen Hilfsspiegel (51) aufweist, der einen nicht auf die optische Hauptachse (47) ausgerichteten Lichtstrahl zur Quelle (43) reflektiert.

13. Vorrichtung nach einem beliebigen der Ansprüche 2 oder 4 oder 5 oder 6, dadurch gekennzeichnet, daß die beiden Polarisationsseparatoren (10, 20) je ein prismatisches Netz (11) besitzen, dessen Flächen (18) bezüglich der Separatorebene geneigt sind, und daß diese Flächen (18) im Vergleich der beiden Separatoren (10, 20) parallel verlaufen.

14. Vorrichtung nach einem beliebigen der Ansprüche 2 oder 4 oder 5, dadurch gekennzeichnet, daß die beiden Polarisationsseparatoren (10, 20) ein prismatisches Netz (11) mit bezüglich der Separatorebene geneigten Flächen (18) besitzen und daß diese Flächen (18) im Vergleich der beiden Separatoren (10, 20) symmetrisch bezüglich des Polarisationsmodulators (2) liegen.

## Claims

1. Projection device comprising:
- a light source (3, 43) producing a first beam (S, P)
- a polarization modulator (2, 46) for selectively rotating the polarization of the light as a function of an image to be projected,
characterized in that it furthermore includes:
- a polarization separator (10) placed between the source (3, 43) and the modulator (2, 46) and allowing the light to be separated in accordance with its state of polarization into a second and a third beam (S1, P1) having different directions, these two beams being applied to the modulator (2, 46) from which they emerge in the form of a fourth and a fifth beam (P2, S2 and P3, S3),
- a polarization analysis means (20, 32, 33) arranged on the opposite side from the separator (10) with respect to the modulator (2, 46), the said analysis means (20, 32, 33) receiving the fourth and fifth beams (P2, S2 and P3, S3) on which it makes it possible to perform a polarization analysis, the said fourth and fifth beams being used at least partially to construct the image to be projected.

2. Device according to Claim 1, characterized in that the analysis means comprise a second polarization separator (20) receiving the fourth and fifth beams (P2, S2 and P3, S3), on the basis of which beams it makes it possible to produce on the one hand a useful beam (UB) and on the other hand two beams (F6, F7) of non-useful light.

3. Device according to one of the preceding claims, characterized in that the polarization modulator (2, 46) is a liquid-crystal screen.

4. Device according to one of the preceding claims, characterized in that at least one of the polarization separators (10, 20) includes a prismatic grating (11) cooperating with a medium of birefringent type (14).

5. Device according to Claim 2, characterized in that the second polarization separator (20) acts on rays having the same polarization as the rays on which the first separator (10) acts.

6. Device according to one of Claims 2 or 5, characterized in that the two polarization separators (10, 20) produce deflections through angles of deflection (U1, U2) having values which are substantially equal but of opposite signs.

7. Device according to one of the preceding claims, characterized in that a mirror (21, 22) is placed in the path of at least one of the beams of non-useful light (F6, F7) with a view to reflecting this light towards the source (3, 43).

8. Device according to any one of Claims 1 or 3 or 4, characterized in that the analysis means comprises a first and a second polarizer (32, 33) placed respectively in the path of the fourth and fifth beams (P2, S2 and P3, S3).

9. Device according to Claim 8, characterized in that the polarizers (32, 33) absorb different components (P, S) of light, having polarizations at 90° to one another.

10. Device according to any one of Claims 1 or 3 or 4, characterized in that it is of the type operating in reflection, and in that the phase modulator (46) is followed, on the opposite side from the first polarization separator (10), by a main mirror (48).

11. Device according to Claim 10, characterized in that the polarization separator (10), the modulator (46) and the main mirror (50) are aligned on a main optical axis (47), and in that the source (46) is situated on a source axis exhibiting with the main optical axis (47) an angle (U10) whose value is substantially the same as that of an angle of deflection (U1) through which the rays of a given polarization are deflected in the phase separator (10).

12. Device according to Claim 11, characterized in that it furthermore includes an auxiliary mirror (50) allowing a light beam which is not oriented along the main optical axis (47) to be reflected towards the source (43).

13. Device according to any one of Claims 2 or 4 or 5 or 6, characterized in that the two polarization separators (10, 20) include a prismatic grating (11) having faces (18) inclined with respect to the plane of the separator, and in that between the two separators (10, 20) the said faces (18) are parallel.

14. Device according to any one of Claims 2 or 4 or 5, characterized in that the two polarization separators (10, 20) include a prismatic grating (11) having faces (18) inclined with respect to the plane of the separator, and in that between the two separators (10, 20) the said faces (18) are substantially symmetrical with respect to the polarization modulator (2).
